# EUROPÄISCHE PATENTSCHRIFT

(11) **EP 4 449 849 B1**
(45) Veröffentlichungstag und Bekanntmachung des Hinweises auf die Patenterteilung: **14.01.2026**
(21) Anmeldenummer: 24157305.4
(22) Anmeldetag: 13.02.2024
(51) Int. Cl.: A01D 41/127, A01D 43/08, A01D 75/18, G06V 20/58

(54) **SYSTEM ZUR VERMEIDUNG EINER KOLLISION ZWISCHEN EINER LANDWIRTSCHAFTLICHEN ERNTEMASCHINE UND EINEM BEGLEITFAHRZEUG**
SYSTEM FOR AVOIDING A COLLISION BETWEEN AN AGRICULTURAL HARVESTER AND A COMPANION VEHICLE
SYSTÈME POUR ÉVITER UNE COLLISION ENTRE UNE MOISSONNEUSE AGRICOLE ET UN VÉHICULE D'ACCOMPAGNEMENT

(30) Priorität: 19.04.2023 DE 102023109829
(43) Veröffentlichungstag der Anmeldung: 23.10.2024
(73) Patentinhaber: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig, Ingo, 33330 Gütersloh (DE); Brune, Markus, 33428 Harsewinkel (DE); Klein-Helmkamp, Marwin, 49565 Bramsche (DE)
(74) Vertreter: CLAAS Gruppe

(56) Entgegenhaltungen:
- DE-A1- 102009 041 646
- DE-A1- 102011 121 414
- US-A1- 2009 044 505

## Beschreibung

Die vorliegende Erfindung betrifft ein System zur Vermeidung einer Kollision zwischen einer landwirtschaftlichen Erntemaschine und einem Begleitfahrzeug gemäß dem Oberbegriff des unabhängigen Patentanspruchs 1, eine landwirtschaftliche Erntemaschine gemäß dem Oberbegriff des unabhängigen Patentanspruchs 14 sowie eine Kombination aus einer landwirtschaftlichen Erntemaschine und einem Begleitfahrzeug gemäß dem Oberbegriff des unabhängigen Patentanspruchs 16.

Zur Bearbeitung von Feldern werden in aller Regel landwirtschaftliche Erntemaschinen verwendet. Dabei sind Erntemaschinen in Form von Mähdreschern oder auch Feldhäckslern bekannt, wobei letztere zur Aufnahme und Verarbeitung von Erntegut wie Gras, Luzerne oder Mais dienen. Die Erntemaschine wird typischerweise in einen Pflanzenbestand manuell eingespurt, sodass die Erntemaschine das Erntegut bearbeiten kann. Sofern ein Lenkwinkel der Erntemaschine beim Einspuren in den Pflanzenbestand manuell eingestellt wird, besteht jedoch die Gefahr, dass einzelne Pflanzenreihen stehen gelassen werden oder eine Schneidwerksbreite der Erntemaschine nicht vollständig ausgelastet wird. Zudem bedarf die manuelle Lenkung kontinuierliche Eingaben eines Fahrers der Erntemaschine, wodurch je nach Erfahrung des Fahrers ein gewisses Maß an Ungenauigkeiten hervorgerufen wird. Folge ist eine ineffiziente Bearbeitung des Felds, welche unter Umständen dazu führt, dass weitere Bearbeitungsschritte erforderlich sind, beispielsweise aufgrund von stehengelassenen Pflanzenreihen.

Um das manuelle Einspuren der landwirtschaftlichen Erntemaschine zu erleichtern sind Systeme bekannt, wie beispielsweise in der EP 3 300 561 A1 offenbart. Die EP 3 300 561 A1 beschreibt eine selbstfahrende landwirtschaftliche Erntemaschine, welche ein Bestimmen einer Bestandskante eines Pflanzenbestands mittels eines Lasersensors ermöglichen soll. Der Lasersensor soll ein Umfeld der Arbeitsmaschine scannen und auf Grundlage von Sensordaten eine vorhandene Fahrgasse ermitteln.

Neben einer präzisen Führung der Erntemaschine auf dem Feld während der Feldbearbeitung muss weiterhin sichergestellt werden, dass das Erntegut von der Erntemaschine zuverlässig in ein Begleitfahrzeug, welches in der Regel aus einem Traktor mit angehängtem Ladewagen gebildet wird, übergeladen wird. Damit der Überladevorgang zielgerichtet und zuverlässig erfolgt, ist es bekannt Einrichtungen zur automatischen Befüllung des Ladewagens bzw. Ladebehälters zu nutzen. Die EP 0 760 202 A1 beschreibt beispielsweise eine Einrichtung zur automatischen Befüllung von einem fahrbaren Ladebehälter von einem Erntefahrzeug aus. Die Überladeeinrichtung wird mittels optischer oder akustischer Sensoren dem Ladebehälter gegenüber ausgesteuert, damit eine zielgenaue optimale Befüllung des Ladebehälters erfolgt. Für die Aussteuerung dienen Sensoren, die zum einen auf den Schüttkegel des Gutes und zum anderen auf die äußeren Raumbegrenzungen des Ladebehälters gerichtet sind.

Bei der Bearbeitung eines Feldes wird demnach der Pflanzenbestand von einer landwirtschaftlichen Erntemaschine geerntet und in ein Begleitfahrzeug übergeladen, welches der Erntemaschine seitlich beabstandet folgt. Während sich die Erntemaschine am Pflanzenbestand bzw. der Bestandskante orientiert, folgt der Fahrer des Begleitfahrzeugs in der Regel einer vorhandenen Fahrspur. Da die Vorsatzgeräte der Erntemaschine in der Regel größer sind als die Breite der Erntemaschine und aufgrund der Tatsache, dass beide Maschinen, also Erntemaschine und Begleitfahrzeug, einer unterschiedlichen Führung auf dem Feld unterliegen, kann es unter Umständen zu Kollisionen von Erntemaschine und Begleitfahrzeug kommen, beispielsweise dann, wenn die Fahrspur, welcher das Begleitfahrzeug folgt, plötzlich in Richtung des Pflanzenbestands verläuft oder Reihen des Pflanzenbestands spitz zu laufen und der Fahrer des Begleitfahrzeugs sich an der Kontur des Pflanzenbestands orientiert. Da Kollisionen von Erntemaschine und Begleitfahrzeug aufgrund eines Defekts an der Erntemaschine, insbesondere an deren Vorsatzgerät, oder eines Defekts am Begleitfahrzeug mit sehr hohen Instandsetzungskosten einhergehen und zusätzlich zu einem Ausfall der Maschinen führt, was in den kurzen Erntephasen besonders ungünstig ist, sind Bestrebungen vorhanden solche, während der Ernte durch häufiger auftretenden, Kollisionen zu vermeiden. Gegenwärtig wird hierzu beispielsweise händisch der Sichtbereich von vorhandenen Sensoren an der Erntemaschine oder am Begleitfahrzeug oder aber ein maximal möglicher Lenkwinkel der Maschinen vorgegeben, der nicht überschritten werden darf. Die Erntemaschine und das Begleitfahrzeug verlieren hierdurch allerding an Performanz, Dynamik und Flexibilität, was sich insgesamt nachteilig auf die Ernte bzw. das Ernteergebnis auswirkt.

Aus der DE 10 2011 121 414 A1 ist beispielsweise bekannt, den Entladeprozess dadurch zu verbessern, dass das Transportfahrzeug durch die Erntemaschine mittels einer Umfeldsensorik erfasst und auf Grundlage der erfassten Daten durch eine Auswerteeinheit erkannt wird. Auf Grundlage dieser Daten kann die Erntemaschine anschließend den Fahrverlauf so regeln, dass der seitliche Abstand zwischen Erntemaschine und Transportfahrzeug in einem vorbestimmten Bereich bleibt. Alternativ kann auch das Transportfahrzeug derartig gesteuert werden, dass ein Abstand zur Erntemaschine eingehalten wird.

Ausgehend hiervon ist es demnach die Aufgabe der vorliegenden Erfindung die beschriebenen Nachteile des Standes der Technik auszuräumen und insbesondere ein System anzugeben, welches Kollisionen zwischen einer landwirtschaftlichen Erntemaschine und einem Begleitfahrzeug während der Ernte auf einem Feld zuverlässig verhindert, sich gleichzeitig allerdings, wenn überhaupt, nur vernachlässigbar auf die Ernte bzw. das Ernteergebnis auswirkt.

Diese Aufgabe wird erfindungsgemäß durch die Merkmale des unabhängigen Patentanspruchs 1 gelöst, wobei vorteilhafte Weiterbildungen des erfindungsgemäßen Systems Gegenstand der entsprechenden abhängigen Patentansprüche 2 bis 13 sind.

Demnach betrifft die vorliegende Erfindung ein System zur Vermeidung einer Kollision zwischen einer landwirtschaftlichen Erntemaschine und einem Begleitfahrzeug. Das System umfasst eine Recheneinheit und mindestens eine Kamera, wobei die Kamera dazu vorgesehen und eingerichtet ist, Bilder einer Frontumgebung der landwirtschaftlichen Erntemaschine zu erfassen. Die Recheneinheit und die Kamera sind derart in datenübertragender Weise miteinander verbunden, dass die Bilder an die Recheneinheit leitbar sind. Das System zur Vermeidung einer Kollision zwischen einer landwirtschaftlichen Erntemaschine und einem Begleitfahrzeug ist dadurch gekennzeichnet, dass die Recheneinheit dazu vorgesehen und eingerichtet ist, mindestens eines der Bilder in einer Bildverarbeitungsroutine derart zu verarbeiten, dass ein Pflanzenbestand sowie ein Begleitfahrzeug auf einem Feld von einem verbleibenden Restbereich des Feldes abgegrenzt und bestimmt werden. Die Recheneinheit ist dazu vorgesehen und eingerichtet, anhand der vorgenommenen Bestimmung des Pflanzenbestands eine Bestandskante des Pflanzenbestands und deren Lage sowie anhand der vorgenommenen Bestimmung des Begleitfahrzeugs eine äußerste Kante des Begleitfahrzeugs und deren Lage zu bestimmen. Die Recheneinheit ist weiterhin dazu vorgesehen und eingerichtet, bei einem Unterschreiten eines definierten Abstands zwischen der Lage der Bestandskante und der Lage der äußersten Kante des Begleitfahrzeugs ein Ereignis zur Vermeidung einer bevorstehenden Kollision zwischen der landwirtschaftlichen Erntemaschine und dem Begleitfahrzeug auszulösen.

Bei der landwirtschaftlichen Erntemaschine handelt es sich vorzugsweise um eine selbstfahrende landwirtschaftliche Erntemaschine in Gestalt eines Feldhäckslers. Bei dem Begleitfahrzeug handelt es sich vorzugsweise um einen Traktor mit angehängtem Ladewagen.

Im Sinne der vorliegenden Erfindung wird unter einer "Kamera" jeder optische Sensor verstanden, der mindestens zweidimensionale Sensordaten ausgibt. Die Kamera ist dabei dazu vorgesehen und eingereicht, optische Sensordaten in Form diskreter Bilder zu erfassen. Bei der Kamera kann es sich um eine herkömmliche Kamera handeln, ebenso kann die Kamera in Form eines LiDAR-Sensors vorliegen. Insbesondere soll die Kamera hierbei Bilder einer Frontumgebung einer landwirtschaftlichen Erntemaschine erfassen, d.h. Bilder einer Umgebung, die sich bei einem Betrieb der Erntemaschine in einer Fahrtrichtung der Erntemaschine betrachtet vor der Erntemaschine befinden.

Die Kamera und die Recheneinheit stehen beispielsweise über Kabel miteinander in Verbindung. Eine drahtlose Verbindung, beispielweise mittels Bluetooth, ist allerdings ebenfalls denkbar.

Bei dem Pflanzenbestand kann es sich beispielsweise um Getreide oder ein anderes mittels der landwirtschaftlichen Erntemaschine abzuerntendes Erntegut, insbesondere Gras, Luzerne oder Mais, handeln. Der Pflanzenbereich unterscheidet sich von dem Restbereich des Feldes, d.h. dem Bereich, in dem kein Pflanzenbestand steht. Beispielsweise kann es sich bei dem Restbereich um einen Bereich handeln, der bereits abgeerntet wurde, sodass dieser lediglich von Acker und/oder Resten von Pflanzenteilen, beispielsweise Stängeln, gebildet ist. Als "Bestandskante" wird im Sinne der vorliegenden Anmeldung die Grenze zwischen dem Pflanzenbereich und dem Restbereich verstanden. Als "äußerste Kante" des Begleitfahrzeugs wird im Sinne der vorliegenden Anmeldung die Grenze zwischen dem Begleitfahrzeug und dem Restbereich verstanden.

Durch das erfindungsgemäße System können Kollisionen zwischen einer Erntemaschine und einem Begleitfahrzeug zuverlässig verhindert werden, wobei die Performanz, Dynamik und Flexibilität der Maschinen und somit die Ernte bzw. das Ernteergebnis, wenn überhaupt, nur vernachlässigbar beeinflusst wird. Die Bestimmung der Kanten und das Inbeziehungsetzen der detektierten Lagen beider Kanten zueinander, bringt eine höhere Flexibilität und Dynamik für die Lenkung der Erntemaschine mit sich. Insbesondere bei einer automatischen Lenkung mittels eines Lenkalgorithmus muss der Lenkalgorithmus demnach nicht statisch beschnitten werden, indem der Wertebereich des Lenkwinkels per se eingeschränkt wird. Vielmehr wird durch die dynamische Bestimmung von Bestandskante und äußerer Kante des Begleitfahrzeugs und der Vergleich der Lagen beider Kanten hinsichtlich eines definierten Abstands in Iterationsschritten für eine dynamische und an die jeweilige Situation auf dem Feld angepasste Lenkung gesorgt, sei sie automatisch oder manuell, sodass Kollisionen zuverlässig verhindert werden.

Gemäß einer vorteilhaften Weiterbildung der Erfindung ist vorgesehen, dass das Ereignis die Ausgabe eines Warnsignals und/oder eines Steuersignals zur Ansteuerung der landwirtschaftlichen Erntemaschine und/oder des Begleitfahrzeugs.

Vorzugsweise ist vorgesehen, dass das Steuersignal zur Ansteuerung der landwirtschaftlichen Erntemaschine und/oder des Begleitfahrzeugs ein Steuersignal zur Ansteuerung einer Lenkeinrichtung und/oder einer Bremseinrichtung der landwirtschaftlichen Erntemaschine und/oder des Begleitfahrzeugs ist.

Die Ausgabe eines Warnsignals und/oder eines Steuersignals sorgt dafür, dass für jeden Betriebszustand der Lenkung der Erntemaschine und/oder des Begleitfahrzeugs eine Routine geschaffen wird, die eine bevorstehende Kollision beider Maschinen miteinander vermeidet. Mittels eines Warnhinweises kann der Fahrer der jeweiligen Maschine selbst Einfluss auf die Lenkung nehmen, um eine Kollision zu vermeiden. Über ein Steuersignal kann ein vom Fahrer unabhängiger Eingriff in den Betrieb der Maschinen erfolgen, um somit die Kollision zu vermeiden.

Gemäß einer vorteilhaften Weiterbildung der Erfindung ist vorgesehen, dass die Recheneinheit dazu vorgesehen und eingerichtet ist, bei einem Unterschreiten eines ersten definierten Abstands das Warnsignal und bei einem Unterschreiten eines zweiten definierten Abstands das Steuersignal zur Ansteuerung der der landwirtschaftlichen Erntemaschine und/oder des Begleitfahrzeugs auszugeben.

Durch eine zwei- bzw. mehrstufige Ereignisroutine wird ein Sicherheitsmechanismus nach Art eines "fail safe"-Prinzips geschaffen. Sollte der/die Fahrer trotz eines Warnsignals für eine bevorstehende Kollision nicht reagieren, greift in letzter Instanz die Recheneinheit über das Steuersignal selbst in den Betrieb der Maschine(n) ein, um die Kollision auf dem Feld zu vermeiden.

Zur Abgrenzung des Pflanzenbereichs, des Begleitfahrzeugs und des Restbereichs ist vorgesehen, dass die Bildverarbeitungsroutine auf künstlicher Intelligenz beruht.

Vorzugsweise nutzt die auf einer künstlichen Intelligenz beruhende Bildverarbeitungsroutine ein trainiertes neuronales Netzwerk, welches besonders bevorzugt ein Artificial Neural Network, ein sogenanntes ANN, oder ein Convolutional Neural Network, ein sogenanntes CNN, ist.

Es hat sich herausgestellt, dass die Verwendung eines neuronalen Netzwerks besonders dazu geeignet ist, die Bestandskante und die äußerste Kante des Begleitfahrzeugs zu bestimmen. Die Verwendung eines trainierten neuronalen Netzwerks wird auch als Deep Learning bezeichnet. Andere Arten künstlicher Intelligenz sind jedoch auch vorstellbar.

Durch die Nutzung von künstlicher Intelligenz wird eine Bildverarbeitungsroutine durch die Recheneinheit angewandt, die eine präzise Bestimmung der Bestandskante und der äußersten Kante des Begleitfahrzeugs erlaubt und somit eine zuverlässige Kollisionsvermeidungsroutine realisiert, die zu einem Rechenaufwand führt, der eine onboard-Verarbeitung der Bilddaten erlaubt.

Gemäß einer vorteilhaften Weiterbildung der Erfindung ist vorgesehen, dass die Recheneinheit dazu vorgesehen und eingerichtet ist, eine Segmentierung einzelner Bilder vorzunehmen, mittels der ein Inhalt eines jeweiligen Bildes in zusammenhängende Segmente unterteilt wird. Bei der Segmentierung werden inhaltlich zusammenhängende Regionen mittels einer Zusammenfassung benachbarter Pixel des Bilds entsprechend einem bestimmten Homogenitätskriterium erzeugt. Hierzu wird die Frontumgebung der landwirtschaftlichen Arbeitsmaschine zunächst mittels der Kamera erfasst und es werden Bilder der Frontumgebung erzeugt. Anschließend werden die Bilder segmentiert und bestimmte Merkmale extrahiert. Auf Grundlage der Merkmale werden die Bilder klassifiziert, um eine Aussage über das jeweilige Bild treffen zu können.

Gemäß einer vorteilhaften Weiterbildung der Erfindung ist dabei vorgesehen, dass die Recheneinheit dazu vorgesehen und eingerichtet ist, einzelne Bilder semantisch zu segmentieren, wobei zusammenhängende Segmente verschiedenen Klassen zugeordnet werden.

Die verschiedenen Klassen sind dabei vorzugweise die Klassen "Pflanzenbestand", "Begleitfahrzeug" und "Hintergrund".

Die Einteilung in die Klasen "Pflanzenbestand", "Begleitfahrzeug" und "Hintergrund" ermöglicht die Abgrenzung zwischen dem Pflanzenbereich, dem Begleitfahrzeug und dem Restbereich, sodass der Pflanzenbereich des Feldes und das Begleitfahrzeug auf dem Feld bestimmbar sind.

Vorzugsweise ist dabei vorgesehen, dass hierzu ein neuronales Netz verwendet wird, welches im Vorfeld trainiert wurde. Dabei ist vorstellbar, dass dem neuronalen Netz entsprechende Bilddaten zugeführt worden sind. Bei dem neuronalen Netz kann es sich beispielsweise um UNET mit einer mobileNET oder mobileNETV2 Architektur handeln.

Gemäß einer vorteilhaften Weiterbildung der Erfindung ist vorgesehen, dass die Recheneinheit dazu vorgesehen und eingerichtet ist, entlang der Bestandskante ein Polygon für den Pflanzenbestand sowie entlang der äußersten Kante des Begleitfahrzeugs ein Polygon für das Begleitfahrzeug zu definieren.

Gemäß einer vorteilhaften Weiterbildung der Erfindung ist dabei vorgesehen, dass die Recheneinheit dazu vorgesehen und eingerichtet ist, die Polygone entlang von Segmentgrenzen zwischen den Segmenten der Klassen "Pflanzenbestand", "Begleitfahrzeug" und "Hintergrund" zu definieren.

Da der Pflanzenbestand und auch das Begleitfahrzeug jeweils keine ideale geometrische Form bilden, hat sich die Definition eines Polygons als besonders gut zur Bestimmung der Bestandskante und der äußersten Kante des Begleitfahrzeugs erwiesen. Sofern mehrere kleine Polygone mit der Klasse "Pflanzenbestand" identifiziert werden, ist die Bildverarbeitungsroutine dazu in der Lage, lediglich dasjenige Polygon zu berücksichtigen, welches die größte Fläche aufweist, da es sich bei diesem mit größter Wahrscheinlichkeit um den abzuerntenden Pflanzenbestand und nicht um einen neben dem Feld liegenden Grünstreifen handelt.

Gemäß einer vorteilhaften Weiterbildung der Erfindung ist dabei vorgesehen, dass die Recheneinheit dazu vorgesehen und eingerichtet ist, einen Referenzpunkt des Polygons für den Pflanzenbestand zu bestimmen, der in einer Bildfläche des jeweiligen Bildes betrachtet eine größte oder eine kleinste Summe aus einer x-Pixelkoordinate und einer y-Pixelkoordinate relativ zu einem definierten Koordinatenkreuz aufweist, wobei das Koordinatenkreuz bezogen auf das jeweilige Bild ausgehend von einem Nullpunkt in horizontale Richtung eine x-Achse und in vertikale Richtung eine y-Achse definiert. Hierzu ist vorzugswiese vorgesehen, dass dem von der Kamera aufgenommenen Bild mit seinen Pixeln ein Koordinatensystem zugeordnet wird, wobei die Pixel jeweils eine x- und eine y-Pixelkoordinate erhalten. Auf diese Weise lässt sich jeder Pixel in dem Bild eindeutig benennen. Da sich das abzuerntende Feld in aller Regel - aus Sicht der Kamera betrachtet - als zusammenhängende Fläche darstellt, wobei eine Bestandskante, entlang der die Erntemaschine geführt wird, typischerweise entweder in einer unteren linken oder einer unteren rechten Ecke des aufgenommenen Bildes befindet, ist es besonders vorteilhaft, die Bestandskante als ein Paar von Pixeln des zuvor bestimmten Polygons zu bestimmen, dessen Summe der Pixelkoordinaten die kleinste ist. Ebenso kann jedoch auch das Paar von Pixeln bestimmt werden, dessen Summe der Pixelkoordinaten die größte ist. Eine Entscheidung darüber, ob die kleinste oder größte Summe zur Bestimmung des Referenzpunkts verwendet werden soll, hängt dabei im Wesentlichen von der Anordnung des Koordinatenkreuzes in dem Bild ab.

Vorzugsweise ist vorgesehen, dass die Recheneinheit dazu vorgesehen und eingerichtet ist, einen Referenzpunkt des Polygons für das Begleitfahrzeug zu bestimmen, der in einer Bildfläche des jeweiligen Bildes betrachtet eine größte oder eine kleinste x-Pixelkoordinate relativ zu dem definierten Koordinatenkreuz aufweist. Für die Bestimmung des Referenzpunktes des Polygons für das Begleitfahrzeug gilt auch hier vorzugsweise, dass dem von der Kamera aufgenommenen Bild mit seinen Pixeln das Koordinatensystem zugeordnet wird, wobei die Pixel jeweils eine x- und eine y-Pixelkoordinate erhalten. Auf diese Weise lässt sich jeder Pixel in dem Bild eindeutig benennen. Da sich das Begleitfahrzeug - aus Sicht der Kamera betrachtet - stets weiter außen im Bild befindet als der Pflanzenbestand bzw. die Bestandskante, typischerweise demnach entweder in einem linken oder einem rechten Bereich des aufgenommenen Bildes, ist es besonders vorteilhaft, den Referenzpunkt des Begleitfahrzeugs lediglich über die kleinste oder größte x-Pixelkoordinate des Polygons zu bestimmen, die y-Koordinate kann außer Acht gelassen werden. Eine Entscheidung darüber, ob die kleinste oder größte x-Pixelkoordinate zur Bestimmung des Referenzpunkts verwendet werden soll, hängt dabei im Wesentlichen von der Anordnung des Koordinatenkreuzes in dem Bild und/oder der Lage des Begleitfahrzeugs im linken oder rechten Bereich des Bildes ab.

Gemäß einer vorteilhaften Weiterbildung der Erfindung ist vorgesehen, dass das System eine Eingabeeinheit umfasst, mittels der Eingaben zur weiteren Verarbeitung mittels der Recheneinheit vornehmbar sind.

Vorzugsweise ist vorgesehen, dass die Eingabeeinheit dazu vorgesehen und eingerichtet ist, das Koordinatenkreuz wechselweise an verschiedenen Stellen und mit verschiedenen Ausrichtungen der x-Achse und/oder der y-Achse zu definieren, wobei weiter vorzugsweise das Koordinatenkreuz in einer unteren linken Ecke des jeweiligen Bildes mit der x-Achse in horizontale Richtung nach rechts und der y-Achse in vertikale Richtung nach oben oder in einer unteren rechten Ecke des jeweiligen Bildes mit der x-Achse in horizontale Richtung nach links und mit der y-Achse in vertikale Richtung nach oben definierbar ist.

Wie vorstehend erwähnt, befindet die Bestandskante des Pflanzenbestands in aller Regel in einer linken oder rechten unteren Ecke und die äußerste Kante des Begleitfahrzeugs im rechten oder linken Bereich des Sichtfelds einer Kamera. Um die vorbeschriebene Bestimmung der Bestandskante mittels Auffindens desjenigen Paars der Pixel dessen Summe die kleinste ist bzw. die Bestimmung der äußersten Kante des Begleitfahrzeugs mittels Auffindens der kleinsten oder größten x-Pixelkoordinate zu nutzen, hat sich die Definition des Koordinatenkreuzes an den unteren beiden Ecken als besonders vorteilhaft erwiesen. Ebenso wäre es jedoch auch denkbar, das Koordinatenkreuz an einen Punkt in dem Bild zu setzen und anschließend eine Koordinatentransformation durchzuführen. Vorzugsweise kann dabei vorgesehen sein, dass das System eine linke als auch eine rechte Bestandskante des Pflanzenbestands identifizieren kann. Hierauf basierend kann vorgesehen sein, dass das System weiterhin zur Identifikation des Begleitfahrzeugs abhängig von der identifizierten linken oder rechten Bestandskante lediglich einen linken oder rechten Bereich des Bildes analysiert. Vorzugsweise kann dabei ferner vorgesehen sein, dass ein Fahrer der Erntemaschine in Abhängigkeit einer Position der Kamera die entsprechende Einstellung auswählt, bevor das System die Bestandskante und die äußerste Kante des Begleitfahrzeugs identifizieren soll.

Eine weitere Ausgestaltung der Erfindung sieht vor, dass die Recheneinheit dazu vorgesehen und eingerichtet ist, an dem Referenzpunkt des Polygons für den Pflanzenbestand die Bestandskante zu definieren, wobei sich die Bestandskante ausgehend von dem Referenzpunkt in vertikale Richtung erstreckt, und an dem Referenzpunkt des Polygons für das Begleitfahrzeug die äußerste Kante des Begleitfahrzeugs zu definieren, wobei sich die äußerste Kante des Begleitfahrzeugs ausgehend von dem Referenzpunkt in vertikale Richtung erstreckt. Da ein Eckpunkt der Bestandskante in aller Regel im Sichtfeld der Kamera in einer unteren linken oder einer unteren rechten Ecke angeordnet ist und sich die Bestandskante ausgehend von dem Eckpunkt in vertikale Richtung erstreckt, die auch der Fahrtrichtung der Erntemaschine entspricht, ist die Definition des Referenzpunkts, von dem aus sich die Bestandskante in vertikale Richtung erstreckt, besonders von Vorteil. Entsprechendes gilt auch für die äußerste Kante des Begleitfahrzeugs. Da ein Referenzpunkt der äußersten Kante des Begleitfahrzeugs in aller Regel im Sichtfeld der Kamera in einem linken oder einem rechten Bildbereich angeordnet ist und sich die Bestandskante ausgehend von dem Referenzpunkt in vertikale Richtung erstreckt, ist die Definition des Referenzpunkts, von dem aus sich die Bestandskante in vertikale Richtung erstreckt, besonders von Vorteil. Die Bestandskante und gleichermaßen auch die äußerste Kante des Begleitfahrzeugs müssen sich jedoch nicht in jedem Fall in lediglich vertikale Richtung erstrecken. Ebenso kann vorgesehen sein, dass beide Kanten im Sichtfeld der Kamera unter einem Winkel zur vertikalen Richtung ausgerichtet ist.

Gemäße einer vorteilhaften Weiterbildung der Erfindung ist vorgesehen, dass die Recheneinheit dazu vorgesehen und eingerichtet ist, einen Lenkalgorithmus zur automatischen Lenkung der landwirtschaftlichen Erntemaschine auszuführen, wobei vorzugsweise die Recheneinheit ferner dazu vorgesehen und eingerichtet ist, dem Lenkalgorithmus die Bestandskante zu übergeben und diesen bzw. diese mittels des Lenkalgorithmus derart zu verarbeiten, dass die landwirtschaftliche Erntemaschine automatisch in den Pflanzenbestand einfährt und/oder automatisch beim Fahren in dem Pflanzenbestand eine Spur hält. Auf diese Weise unterstützt das System den Fahrer der Erntemaschine nicht nur beim Einspuren in die Bestandskante, sondern auch beim anschließenden Bearbeiten des Pflanzenbestands. Vorteilhafter Weise wird der Fahrer somit fortwährend unterstützt, sodass Fehler hinsichtlich einer Lenkung der Erntemaschine reduziert sind. Dabei kann vorzugsweise ferner vorgesehen sein, dass das System zusätzlich Daten eines GPS-Systems nutzt oder mit Reihentastern kombinierbar ist. Dabei kann es besonders von Vorteil sein, wenn der Fahrer die Erntemaschine so an den Pflanzenbestand heranfährt, dass dieser in einem Sichtfeld der Kamera auftaucht. Je nach Position der Kamera befindet sich der Pflanzenbestand in einem linken oder an einem rechten Rand des jeweiligen von der Kamera aufgenommen Bilds. Anschließend kann der Fahrer nach Eingabe über die Position der Kamera mittels der Eingabeeinheit das System aktivieren, welches den Pflanzenbestand und die Bestandskante identifiziert und die Erntemaschine automatisch, d.h. ohne händisches Zutun, in die Bestandskante einspurt und anschließend auch selbstständig über den Pflanzenbestand lenkt.

Wird durch das System eine bevorstehende Kollision prognostiziert und demnach ein Ereignis zur Vermeidung einer solchen Kollision ausgelöst, so kann der Fahrer durch einen Eingriff in die Lenkung zur Vermeidung der Kollision die automatische Lenkung abschalten oder aber die automatische Lenkung selbst eine Lenkbewegung ausführen, die zur Vermeidung der Kollision führt.

Die erfindungsgemäße Aufgabe wird ferner von einer landwirtschaftlichen Erntemaschine gemäß dem unabhängigen Patentanspruch 14 gelöst, wobei eine vorteilhafte Weiterbildung der erfindungsgemäßen landwirtschaftlichen Erntemaschine Gegenstand des entsprechenden abhängigen Patentanspruchs 15 ist.

Demnach betrifft die vorliegende Erfindung weiterhin eine landwirtschaftliche Erntemaschine, insbesondere einen Feldhäcksler, mit einem zuvor beschriebenen System zur Vermeidung einer Kollision zwischen der landwirtschaftlichen Erntemaschine und einem Begleitfahrzeug.

Gemäß einer vorteilhaften Weiterbildung der Erfindung ist vorgesehen, dass die mindestens eine Kamera des Systems frontseitig an der landwirtschaftlichen Erntemaschine, insbesondere an einer Kabine der landwirtschaftlichen Erntemaschine, und/oder an einem an die landwirtschaftliche Erntemaschine adaptierten Vorsatzgerät angeordnet ist.

Weiterhin wird die erfindungsgemäße Aufgabe von einer Kombination aus einer landwirtschaftlichen Erntemaschine und einem Begleitfahrzeug gemäß dem unabhängigen Patentanspruch 16 gelöst.

Demnach betrifft die vorliegende Erfindung weiterhin eine Kombination aus einer solchen landwirtschaftlichen Erntemaschine, insbesondere einem solchen Feldhäcksler, und einem Begleitfahrzeug, insbesondere einem Traktor mit angehängtem Ladewagen.

Die vorliegende Erfindung wird nachstehend anhand der in den Figuren abgebildeten Ausführungsformen näher beschrieben.

Es zeigen:
- FIG. 1: eine schematische und exemplarische Ansicht einer erfindungsgemäßen landwirtschaftlichen Erntemaschine in Gestalt eines Feldhäckslers;
- FIG. 2: eine schematische und exemplarische Ansicht einer erfindungsgemäßen Kombination aus der landwirtschaftlichen Erntemaschine gemäß FIG. 1 und einem Begleitfahrzeug in Gestalt eines Traktors mit angehängtem Ladewagen während eines Überladevorgangs auf einem Feld;
- FIG. 3: eine schematische und exemplarische Ansicht eines erfindungsgemäßen Systems zur Vermeidung einer Kollision zwischen einer erfindungsgemäßen landwirtschaftlichen Erntemaschine und eines Begleitfahrzeugs;
- FIG. 4: eine schematische und exemplarische Visualisierung einer semantischen Bildsegmentierung eines Pflanzenbestands und eines Begleitfahrzeugs; und
- FIG. 5: eine weitere schematische und exemplarische Visualisierung einer semantischen Bildsegmentierung eines Pflanzenbestands und eines Begleitfahrzeugs.

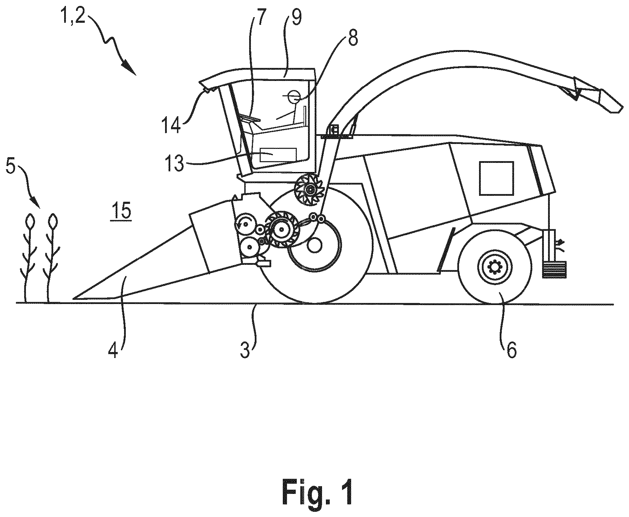

FIG. 1 zeigt eine schematische und exemplarische Ansicht einer landwirtschaftlichen Erntemaschine 1. Die Erntemaschine 1 umfasst demnach eine Mehrzahl an Arbeitsaggregaten, die dem Antrieb der Erntemaschine 1 und/oder der Verarbeitung von Erntegut auf einem Feld 3 dienen. Ein Arbeitsaggregat der Erntemaschine 1 zur Verarbeitung von Erntegut stellt beispielsweise ein sogenanntes Vorsatzgerät 4 dar, welches an die Erntemaschine 1 adaptiert ist und mittels dem ein auf Feld 3 aufstehender Pflanzenbestand 5 geerntet bzw. verarbeitet werden kann. Bei der Erntemaschine 1 kann es sich beispielsweise, wie in FIG. 1 dargestellt, um einen Feldhäcksler handeln, der auf dem Feld 3 aufstehende Maispflanzen mittels eines als sogenanntes Maisgebiss ausgebildeten Vorsatzgeräts verarbeiten soll. Die Erntemaschine 1 umfasst weiterhin mindestens zwei schwenkbare, mit einem Untergrund in Kontakt stehende Bodeneingriffsmittel 6. Eine Ausrichtung der Bodeneingriffsmittel 6 ist dabei zwecks Änderung einer Fahrtrichtung der Erntemaschine 1 veränderbar. Hierzu umfasst die Erntemaschine 1 ein Lenkrad 7, das von einem Fahrer 8 der landwirtschaftlichen Erntemaschine 1 bedient werden kann, um die Erntemaschine 1 zu lenken. Darüber hinaus umfasst die Erntemaschine 7 eine Kabine 9, von welcher aus die Erntemaschine 1 von dem Fahrer 8 steuerbar ist.

Wie beschrieben ist die Erntemaschine 1 dazu vorgesehen und eingerichtet, den Pflanzenbestand 5 auf dem Feld 3 abzuernten bzw. zu verarbeiten. Um den Pflanzenbestand 5 abernten zu können, muss die Erntemaschine 1 in Richtung des Pflanzenbestands 5 gelenkt werden, wobei eine Bestandskante 10 des Pflanzenbestands 5 derart abgefahren werden muss, dass das Vorsatzgerät 4 die Pflanzen des Pflanzenbestands 5 erreicht.

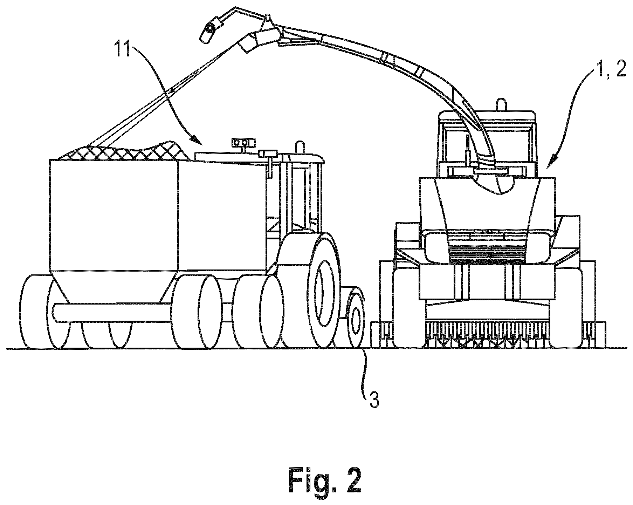

Neben der Erntemaschine 1, welche die Pflanzen des Pflanzenbestands 5 erntet, befindet sich in aller Regel ein Begleitfahrzeug 11 auf dem Feld 3, welches dazu dient das von der Erntemaschine 1 geerntete Erntegut aufzunehmen, ein Prozess der auch als Überladevorgang bezeichnet wird und in FIG. 2 dargestellt ist. Bei einem solchen Begleitfahrzeug 11 handelt es sich in aller Regel um einen Traktor mit angehängtem Ladewagen, wie ebenfalls in FIG. 2 dargestellt. Auch das Begleitfahrzeug 11 wird von einem - in den FIGs. nicht dargestellten - Fahrer gesteuert, welcher das Begleitfahrzeug 11 üblicherweise entlang von auf dem Feld 3 vorhandenen Fahrspuren führt. Aufgrund der unterschiedlichen Art der Führung beider Fahrzeuge 1, 11 auf dem Feld 3 kann es im Betrieb unter Umständen zu Kollisionen kommen, beispielsweise dann, wenn die Erntemaschine 1 entlang einer Bestandskante 11 geführt wird, und die Fahrspur, welcher der Fahrer des Begleitfahrzeugs 11 folgt, plötzlich in Richtung des Pflanzenbestands 5 verläuft oder aber Reihen des Pflanzenbestands 5 spitz zu laufen und der Fahrer des Begleitfahrzeugs 11 sich anstelle einer Fahrspur an der Kontur des Pflanzenbestands 5 orientiert.

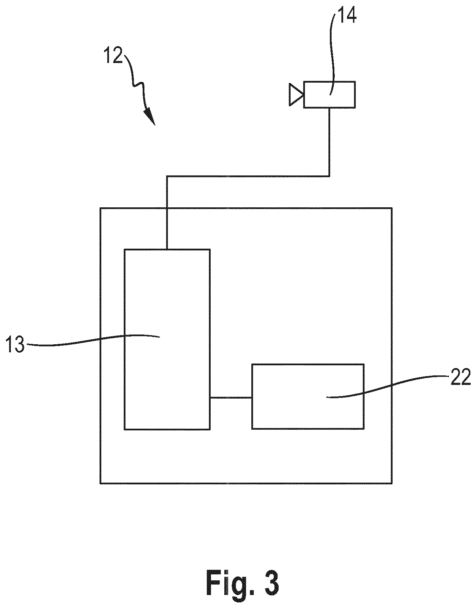

Um derartige Kollisionen zwischen einer Erntemaschine 1 und einem Begleitfahrzeug 11 zu vermeiden umfasst die Erntemaschine 1 ein System 12 zur Vermeidung einer Kollision zwischen der landwirtschaftlichen Erntemaschine 1 und einem Begleitfahrzeug 11, welches exemplarisch und schematisch in FIG. 3 dargestellt ist. Das System 12 umfasst eine Recheneinheit 13 sowie mindestens eine Kamera 14, welche frontseitig an der Erntemaschine 1 angeordnet ist, beispielsweise an einem Kabinendach der Kabine 9 der Erntemaschine 1 und mit einem Sichtfeld in Richtung einer Frontumgebung 15 der Erntemaschine 1, auf dem Feld 3 auch als Vorfeld bezeichnet, ausgerichtet ist. Alternativ oder ergänzend hierzu kann die mindestens eine Kamera 14 auch am Vorsatzgerät 4 angeordnet sein. Vorzugsweise sind bei einer derartigen Anordnung zwei Kameras 14 am Vorsatzgerät 4 angeordnet, jeweils eine dieser beiden Kameras 14 im äußersten Bereich des Vorsatzgeräts 4. Die mindestens eine Kamera 14 ist dazu vorgesehen und eingerichtet, Bilder 16 der Frontumgebung 15 zu erfassen und diese an die Recheneinheit 13 des Systems 12 zu leiten. Die Recheneinheit 13 verarbeitet die von der Kamera 14 erfassten Bilder schließlich. Hierzu nutzt die Recheneinheit 13 eine Bildverarbeitungsroutine, die vorzugsweise auf einer künstlichen Intelligenz in Form eines neuronalen Netzwerks beruht. Dabei segmentiert die Bildverarbeitungsroutine, vorzugsweise die künstliche Intelligenz, die einzelnen aufgenommenen Bilder 16 zunächst. Um Kollisionen zwischen einer Erntemaschine 1 und einem Begleitfahrzeug 11 auf dem Feld 3 zu vermeiden ist es wesentlich sowohl die Bestandskante 10 des Pflanzenbestands 5 als auch eine äußerste Kante des Begleitfahrzeugs 11 zu bestimmen und diese zueinander ins Verhältnis zu setzen. Um die Bestandskante 10 der Pflanzenbestands 5 und eine äußerste Kante 17 eines Begleitfahrzeugs 11 zu bestimmen, werden die resultierenden Segmente 18 der Bilder den Klassen "Pflanzenbestand", "Begleitfahrzeug" und "Hintergrund" zugeordnet. Ausgehend von der Segmentierung und der Klassifizierung werden Polygone 19, 20 definiert, die entlang von Segmentgrenzen 21 zwischen den Segmenten 18 der Klassen verlaufen.

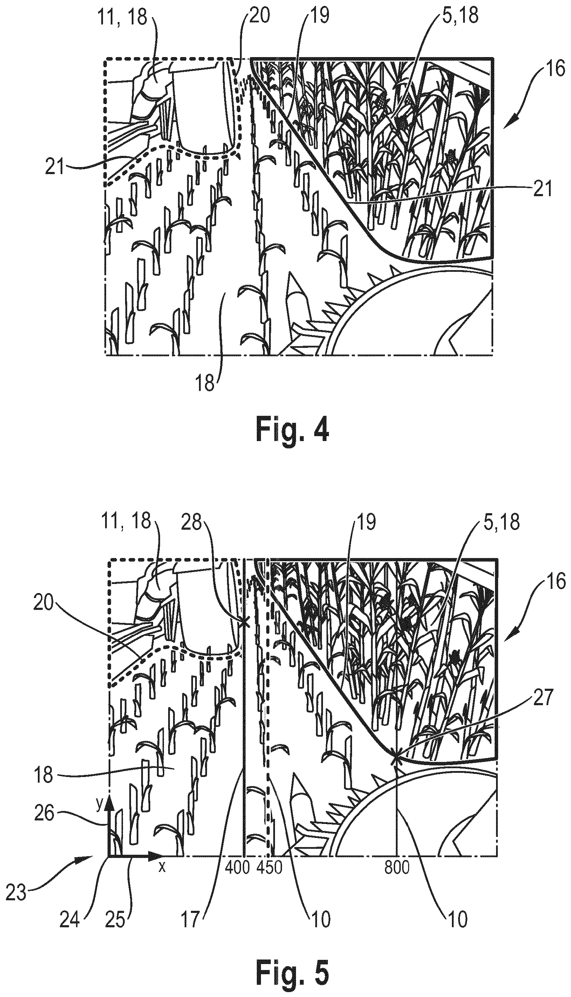

Es ist vorgesehen, dass der Fahrer 8 der Erntemaschine 1 zunächst eigenständig an den Pflanzenbestand 5 heranfährt, sodass das Sichtfeld der Kamera 14 den Pflanzenbestand 5 erfasst, wie in den FIGs. 4 und 5 gezeigt. Anschließend aktiviert der Fahrer 8 das System 12 der Erntemaschine 1. Hierzu nutzt der Fahrer 8 eine Eingabeeinheit 22 der Erntemaschine 1, welche in der Kabine 9 angeordnet ist, um ein Koordinatenkreuz 23 zu definieren. Die Eingabeeinheit 22 ist dabei in datenübertragender Weise mit einer Recheneinheit 13 verbunden, welche wiederum in datenübertragender Weise mit der mindestens einen Kamera 14 verbunden ist, wie in FIG. 2 schematisch dargestellt. Auf diese Weise lässt sich die Recheneinheit 13 mittels der Eingabeeinheit 22 steuern, wobei Recheneinheit 13 Daten von der Kamera 14 erhält.

In dem in den FIGs. 4 und 5 gezeigten Sichtfeld der Kamera 14 definiert der Fahrer 8 einen Nullpunkt 24 des Koordinatenkreuzes 23 in einer unteren linken Ecke des Bilds 16 mit einer x-Achse 25 in horizontale Richtung nach rechts und einer y-Achse 26 in vertikale Richtung nach oben. Das System 12 erfasst mittels der Kamera 14 die Bilder 16 der Frontumgebung 15, und damit auch des Pflanzenbestands 5 und des Begleitfahrzeugs 11, und segmentiert diese. Als Ergebnis werden drei Segmente 18 gebildet, wobei das erste Segment 18 der Klasse "Pflanzenbestand" zugeordnet, das zweite Segment 18 der Klasse "Begleitfahrzeug" und das dritte Segment 18 der Klasse "Hintergrund" zugeordnet ist, wie in der FIG. 3 erkennbar ist. Die Bilder 16 werden dabei in ein Koordinatensystem überführt, sodass jeder Pixel des Bilds 16 eine x- und eine y-Pixelkoordinate und damit eindeutig zugeordnet werden kann. Das Koordinatenkreuz 23 ist dabei von dem Nullpunkt 24 aus definiert, der sich in der FIG. 5 in der unteren linken Ecke des Bildes 16 befindet. Die x-Achse 25 verläuft dabei in horizontale Richtung nach rechts, die y-Achse 26 in vertikale Richtung nach oben. Anschließend werden auf Grundlage der Segmentierung Polygone 19, 20 bestimmt, welche das Segment 18 der Klasse "Pflanzenbestand" und das Segment 18 der Klasse "Begleitfahrzeug" einschließt. Ausgehend von dem Polygon 19 für den Pflanzenbestand 5 wird ein Referenzpunkt 27 dieses Polygons 19 bestimmt. Der Referenzpunkt 27 bestimmt sich aus dem Paar von Pixelkoordinaten dessen Summe die kleinste aller Paare der Pixelkoordinaten des Polygons 19 ist. Ausgehend von dem Polygon 20 für das Begleitfahrzeug 11 wird entsprechend ein Referenzpunkt 28 dieses Polygons 20 bestimmt. Der Referenzpunkt 28 bestimmt sich je nach Lage des Begleitfahrzeugs 11, welches sich entweder im linken oder rechten Bildbereich befindet, aus der kleinsten oder größten x-Pixelkoordinate, die genaue y-Koordinate ist für den Referenzpunkt 28 irrelevant und kann beliebig gewählt werden.

Ausgehend von dem ermittelten Referenzpunkt 27 wird die Bestandskante 10 definiert, die sich ausgehend von dem Referenzpunkt 27 in vertikale Richtung erstreckt. Die Bestandskante 10 ist in FIG. 5 mit einer durchgezogenen vertikalen Linie entlang der y-Achse 26 dargestellt. Gleichermaßen wird ausgehend von dem ermittelten Referenzpunkt 28 die äußerste Kante 17 des Begleitfahrzeugs 11 definiert, die sich ausgehend von dem Referenzpunkt 28 ebenfalls in vertikale Richtung erstreckt. Die äußerste Kante 17 des Begleitfahrzeugs 11 ist in FIG. 5 ebenfalls mit einer durchgezogenen vertikalen Linie entlang der y-Achse 26 dargestellt.

Damit im Betrieb auf dem Feld 3 eine Kollision der Fahrzeuge 1, 11 vermieden wird, werden die ermittelten Kanten 10, 17 bzw. deren ermittelte Lagen im Bild, also die Pixelkoordinaten, insbesondere die x-Pixelkoordinaten, von der Recheneinheit 13 zueinander in Beziehung gesetzt und bei einem Unterschreiten eines definierten Abstands zwischen der Lage der Bestandskante 10 und der Lage der äußersten Kante 17 des Begleitfahrzeugs 11 ein Ereignis zur Vermeidung einer bevorstehenden Kollision zwischen der Erntemaschine 1 und dem Begleitfahrzeug 11 durch die Recheneinheit 13 ausgelöst. Das Ereignis kann die Ausgabe eines Warnsignals, beispielsweise eines Warnhinweises auf einem Dashboard in der Kabine 9, eines Warntons über Lautsprecher in der Kabine 9 oder dergleichen, und/oder eines Steuersignals zur Ansteuerung der Erntemaschine 1 sein. Sofern die Erntemaschine 1 und das Begleitfahrzeug 11 dazu in der Lage sind miteinander zu kommunizieren, kann das Warnsignal auch im Begleitfahrzeug 11 oder aber ein Steuersignal zur Ansteuerung des Begleitfahrzeugs 11 durch die Recheneinheit 13 ausgegeben werden. Bei dem Steuersignal handelt es sich vorzugsweise um ein Steuersignal zur Ansteuerung einer Lenkeinrichtung und/oder Bremseinrichtung der Erntemaschine 1 und/oder des Begleitfahrzeugs 11. Das System 12 kann auch zwei- oder mehrstufig arbeiten. So kann es vorgesehen sein, dass bei unterschreiten eines ersten definierten Abstands zwischen Bestandskante 10 und äußerster Kante 17 des Begleitfahrzeugs 11 zunächst ein Warnsignal ausgegeben wird. Wird ein zweiter definierter Abstand zwischen Bestandskante 10 und äußerster Kante 17 des Begleitfahrzeugs 11 unterschritten, der geringer ist als der erste definierte Abstand, wird ein Steuersignal zur Ansteuerung der Erntemaschine 1 und/oder des Begleitfahrzeugs 11 durch die Recheneinheit 13 ausgegeben und den entsprechenden Komponenten zugeführt.

Unter Bezugnahme auf die FIG. 5 wird beispielsweise die Bestandskante 10 mittels der Recheneinheit 13 und der Bildverarbeitungsroutine bei einer x-Pixelkoordinate von 800 bestimmt. Die äußerste Kante 17 des Begleitfahrzeugs 11 bei einer x-Pixelkoordinate von 400. Ein Abstand zwischen Bestandskante 10 und äußerster Kante 17 des Begleitfahrzeugs 11 wird beispielsweise mit 50 Pixeln in x-Pixelkoordinatenrichtung definiert, um eine Kollision zwischen der Erntemaschine 1 und dem Begleitfahrzeug 11 zu vermeiden. Verändert sich demnach die Lage der Bestandskante 10 und/oder der äußersten Kante 17 des Begleitfahrzeugs 11 derart, dass beispielsweise die Bestandskante 10 plötzlich bei einer x-Pixelkoordinate von 450 (strichpunktiere vertikale Linie entlang der y-Achse 26 in FIG. 5), die äußerste Kante 17 des Begleitfahrzeugs 11 jedoch weiterhin bei einer x-Pixelkoordinate von 400 bestimmt wird oder aber beispielsweise die äußerste Kante 17 des Begleitfahrzeugs 11 plötzlich bei einer x-Pixelkoordinate von 750, die Bestandskante 10 jedoch weiterhin bei einer x-Pixelkoordinate von 800 bestimmt wird, so löst die Recheneinheit 13 das Ereignis zur Vermeidung einer bevorstehenden Kollision zwischen der Erntemaschine 1 und dem Begleitfahrzeug 11 aus. Es sei angemerkt, dass die Zahlenwerte der zuvor angegeben x-Pixelkoordinaten lediglich beispielshaften Charakter haben und nicht als einschränkend zu verstehen sind.

Die Bestandskante 5 wird weiterhin vorzugsweise an einen Lenkalgorithmus zur automatischen Lenkung der Erntemaschine 1 übergeben. Der Lenkalgorithmus ist dabei dazu geeignet, die Erntemaschine 1 automatisch, d.h. ohne händisches Zutun, in den Pflanzenbestand 5 einspurt und auch beim weiteren Fahren der Erntemaschine 1 eine Spur hält, um den Pflanzenbestand 5 optimal abernten zu können. Die Erntemaschine 1 lenkt damit automatisch in den Pflanzenbestand 5 und hält anschließend weiter im Pflanzenbestand 5 die Spur. Sollte der Fahrer 8 mit dem vorgeschlagenen Lenkwinkel des Systems 12 nicht einverstanden sein, so lässt sich die Automatik durch eine Bewegung des Lenkrades 7 deaktivieren und die manuelle Lenkung nutzen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliche Erntemaschine
- 2: Feldhäcksler
- 3: Feld
- 4: Vorsatzgerät
- 5: Pflanzenbestand
- 6: Bodeneingriffsmittel
- 7: Lenkrad
- 8: Fahrer
- 9: Kabine
- 10: Bestandskante
- 11: Begleitfahrzeug
- 12: System
- 13: Recheneinheit
- 14: Kamera
- 15: Frontumgebung
- 16: Bild
- 17: Äußerste Kante des Begleitfahrzeugs
- 18: Segment
- 19: Polygon des Pflanzenbestands
- 20: Polygon des Begleitfahrzeugs
- 21: Segmentgrenze
- 22: Eingabeeinheit
- 23: Koordinatenkreuz
- 24: Nullpunkt
- 25: x-Achse
- 26: y-Achse
- 27: Referenzpunkt
- 28: Referenzpunkt

## Patentansprüche

1. System (12) zur Vermeidung einer Kollision zwischen einer landwirtschaftlichen Erntemaschine (1), insbesondere einem Feldhäcksler (2), und einem Begleitfahrzeug (11), insbesondere einem Traktor mit angehängtem Ladewagen, wobei das System (12) eine Recheneinheit (13) und mindestens eine Kamera (14) umfasst, wobei die Kamera (14) dazu vorgesehen und eingerichtet ist, Bilder (16) einer Frontumgebung (15) der landwirtschaftlichen Erntemaschine (1) zu erfassen, wobei die Recheneinheit (13) und die Kamera (14) derart in datenübertragender Weise miteinander verbunden sind, dass die Bilder (16) an die Recheneinheit (13) leitbar sind, **dadurch gekennzeichnet, dass** die Recheneinheit (13) dazu vorgesehen und eingerichtet ist, mindestens eines der Bilder (16) in einer Bildverarbeitungsroutine derart zu verarbeiten, dass ein Pflanzenbestand (5) sowie ein Begleitfahrzeug (11) auf einem Feld (3) von einem verbleibenden Restbereich des Feldes (3) abgegrenzt und bestimmt werden, wobei die Recheneinheit (13) dazu vorgesehen und eingerichtet ist, anhand der vorgenommenen Bestimmung des Pflanzenbestands (5) eine Bestandskante (10) des Pflanzenbestands (5) und deren Lage sowie anhand der vorgenommenen Bestimmung des Begleitfahrzeugs (11) eine äußerste Kante (17) des Begleitfahrzeugs (11) und deren Lage zu bestimmen, wobei die Recheneinheit (13) dazu vorgesehen und eingerichtet ist, bei einem Unterschreiten eines definierten Abstands zwischen der Lage der Bestandskante (10) und der Lage der äußersten Kante (17) des Begleitfahrzeugs (11) ein Ereignis zur Vermeidung einer bevorstehenden Kollision zwischen der landwirtschaftlichen Erntemaschine (1) und dem Begleitfahrzeug (11) auszulösen.

2. System (12) nach Anspruch 1, **dadurch gekennzeichnet, dass** das Ereignis die Ausgabe eines Warnsignals und/oder eines Steuersignals zur Ansteuerung der landwirtschaftlichen Erntemaschine (1) und/oder des Begleitfahrzeugs (11), vorzugsweise ein Steuersignal zur Ansteuerung einer Lenkeinrichtung und/oder einer Bremseinrichtung der landwirtschaftlichen Erntemaschine (1) und/oder des Begleitfahrzeugs (11), ist.

3. System (12) nach Anspruch 2, **dadurch gekennzeichnet, dass** die Recheneinheit (13) dazu vorgesehen und eingerichtet ist, bei einem Unterschreiten eines ersten definierten Abstands das Warnsignal und bei einem Unterschreiten eines zweiten definierten Abstands das Steuersignal zur Ansteuerung der landwirtschaftlichen Erntemaschine (1) und/oder des Begleitfahrzeugs (11) auszugeben.

4. System (12) nach einem der Ansprüche 1 bis 3, **dadurch gekennzeichnet, dass** die Bildverarbeitungsroutine auf künstlicher Intelligenz beruht, vorzugsweise ein trainiertes neuronales Netzwerk nutzt, besonders bevorzugt ein Artificial Neural Network (ANN) oder ein Convolutional Neural Network (CNN).

5. System (12) nach einem der Ansprüche 1 bis 4, **dadurch gekennzeichnet, dass** die Recheneinheit (13) dazu vorgesehen und eingerichtet ist, eine Segmentierung einzelner Bilder (16) vorzunehmen, mittels der ein Inhalt eines jeweiligen Bildes (16) in zusammenhängende Segmente (18) unterteilt wird.

6. System (12) nach Anspruch 5, **dadurch gekennzeichnet, dass** die Recheneinheit (13) dazu vorgesehen und eingerichtet ist, einzelne Bilder (16) semantisch zu segmentieren, wobei zusammenhängende Segmente (18) verschiedenen Klassen zugeordnet werden, wobei die verschiedenen Klassen vorzugsweise die Klassen "Pflanzenbestand", "Begleitfahrzeug" und "Hintergrund" sind.

7. System (12) nach einem der Ansprüche 1 bis 6, **dadurch gekennzeichnet, dass** die Recheneinheit (13) dazu vorgesehen und eingerichtet ist, entlang der Bestandskante (10) ein Polygon (19) für den Pflanzenbestand (5) sowie entlang der äußersten Kante (17) des Begleitfahrzeugs (11) ein Polygon (20) für das Begleitfahrzeug (11) zu definieren.

8. System (12) nach Anspruch 7, **dadurch gekennzeichnet, dass** die Recheneinheit (13) dazu vorgesehen und eingerichtet ist, die Polygone (19, 20) entlang von Segmentgrenzen (21) zwischen den Segmenten (18) der Klassen "Pflanzenbestand", "Begleitfahrzeug" und "Hintergrund" zu definieren.

9. System (12) nach Anspruch 7 oder 8, **dadurch gekennzeichnet, dass** die Recheneinheit (13) dazu vorgesehen und eingerichtet ist, einen Referenzpunkt (27) des Polygons (19) für den Pflanzenbestand (5) zu bestimmen, der in einer Bildfläche des jeweiligen Bildes (16) betrachtet eine größte oder eine kleinste Summe aus einer x-Pixelkoordinate und einer y-Pixelkoordinate relativ zu einem definierten Koordinatenkreuz (23) aufweist, wobei das Koordinatenkreuz (23) bezogen auf das jeweilige Bild (16) ausgehend von einem Nullpunkt (24) in horizontale Richtung eine x-Achse (25) und in vertikale Richtung eine y-Achse (26) definiert.

10. System (12) nach Anspruch 9, **dadurch gekennzeichnet, dass** die Recheneinheit (13) dazu vorgesehen und eingerichtet ist, einen Referenzpunkt (28) des Polygons (20) für das Begleitfahrzeug (11) zu bestimmen, der in einer Bildfläche des jeweiligen Bildes (16) betrachtet eine größte oder eine kleinste x-Pixelkoordinate relativ zu dem definierten Koordinatenkreuz (23) aufweist.

11. System (12) nach Anspruch 9 oder 10, **dadurch gekennzeichnet, dass** das System (12) eine Eingabeeinheit (22) umfasst, mittels der Eingaben zur weiteren Verarbeitung mittels der Recheneinheit (13) vornehmbar sind, wobei vorzugsweise die Eingabeeinheit (22) dazu vorgesehen und eingerichtet ist, das Koordinatenkreuz (23) wechselweise an verschiedenen Stellen und mit verschiedenen Ausrichtungen der x-Achse (25) und/oder der y-Achse (26) zu definieren, wobei vorzugsweise das Koordinatenkreuz (23) in einer unteren linken Ecke des jeweiligen Bildes (16) mit der x-Achse (25) in horizontale Richtung nach rechts und der y-Achse (26) in vertikale Richtung nach oben oder in einer unteren rechten Ecke des jeweiligen Bildes (16) mit der x-Achse (25) in horizontale Richtung nach links und mi der y-Achse (26) in vertikale Richtung nach oben definierbar ist.

12. System (12) nach Anspruch 9 bis 11, **dadurch gekennzeichnet, dass** die Recheneinheit (13) dazu vorgesehen und eingerichtet ist, an dem Referenzpunkt (27) des Polygons (19) für den Pflanzenbestand (5) die Bestandskante (10) zu definieren, wobei sich die Bestandskante (10) ausgehend von dem Referenzpunkt (27) in vertikale Richtung erstreckt, und an dem Referenzpunkt (28) des Polygons (20) für das Begleitfahrzeug (11) die äußerste Kante (17) des Begleitfahrzeugs (11) zu definieren, wobei sich die äußerste Kante (17) des Begleitfahrzeugs (11) ausgehend von dem Referenzpunkt (28) in vertikale Richtung erstreckt.

13. System (12) nach einem der Ansprüche 1 bis 12, **dadurch gekennzeichnet, dass** die Recheneinheit (13) dazu vorgesehen und eingerichtet ist, einen Lenkalgorithmus zur automatischen Lenkung der landwirtschaftlichen Erntemaschine (1) auszuführen, wobei vorzugsweise die Recheneinheit (13) ferner dazu vorgesehen und eingerichtet ist, dem Lenkalgorithmus die Bestandskante (10) zu übergeben und diesen bzw. diese mittels des Lenkalgorithmus derart zu verarbeiten, dass die landwirtschaftliche Erntemaschine (1) automatisch in den Pflanzenbestand (5) einfährt und/oder automatisch beim Fahren in dem Pflanzenbestand (5) eine Spur hält.

14. Landwirtschaftliche Erntemaschine (1), insbesondere Feldhäcksler (2), **dadurch gekennzeichnet, dass** die landwirtschaftliche Erntemaschine (1) ein System (12) zur Vermeidung einer Kollision zwischen der landwirtschaftlichen Erntemaschine (1) und einem Begleitfahrzeug (11), insbesondere einem Traktor mit angehängtem Ladewagen, nach einem der Ansprüche 1 bis 13 umfasst.

15. Landwirtschaftliche Erntemaschine (1) nach Anspruch 14, **dadurch gekennzeichnet, dass** die mindestens eine Kamera (14) des Systems (12) frontseitig an der landwirtschaftlichen Erntemaschine (1), insbesondere an einer Kabine (9) der landwirtschaftlichen Erntemaschine (1), und/oder an einem an die landwirtschaftliche Erntemaschine (1) adaptierten Vorsatzgerät (4) angeordnet ist.

16. Kombination aus einer landwirtschaftlichen Erntemaschine (1), insbesondere einem Feldhäcksler (2), und einem Begleitfahrzeug (11), insbesondere einem Traktor mit angehängtem Ladewagen, **dadurch gekennzeichnet, dass** die landwirtschaftliche Erntemaschine (1) nach Anspruch 14 oder 15 ausgebildet ist.

## Claims

1. System (12) for preventing a collision between an agricultural harvester (1), in particular a forage harvester (2), and an accompanying vehicle (11), in particular a tractor with an attached loader wagon, wherein the system (12) comprises a computing unit (13) and at least one camera (14), wherein the camera (14) is provided and configured to detect images (16) of a front environment (15) of the agricultural harvester (1), wherein the computing unit (13) and the camera (14) are connected to each other in a data-transmitting manner such that the images (16) can be passed to the computing unit (13), **characterized in that** the computing unit (13) is provided and configured to process at least one of the images (16) in an image processing routine such that a crop stand (5) and an accompanying vehicle (11) in a field (3) are delimited from a remaining region of the field (3) and determined, wherein the computing unit (13) is provided and configured to determine, on the basis of the determination of the crop stand (5) performed, an edge (10) of the crop stand (5) and the position of this edge and, on the basis of the determination of the accompanying vehicle (11) performed, an outermost edge (17) of the accompanying vehicle (11) and the position of this outermost edge, wherein the computing unit (13) is provided and configured to trigger an event for preventing an imminent collision between the agricultural harvester (1) and the accompanying vehicle (11) when a defined distance between the position of the stand edge (10) and the position of the outermost edge (17) of the accompanying vehicle (11) is undershot.

2. System (12) according to Claim 1, **characterized in that** the event is the output of a warning signal and/or a control signal for actuating the agricultural harvester (1) and/or the accompanying vehicle (11), preferably a control signal for actuating a steering device and/or a braking device of the agricultural harvester (1) and/or the accompanying vehicle (11).

3. System (12) according to Claim 2, **characterized in that** the computing unit (13) is provided and configured to output the warning signal when a first defined distance is undershot and to output the control signal for actuating the agricultural harvester (1) and/or the accompanying vehicle (11) when a second defined distance is undershot.

4. System (12) according to any of Claims 1 to 3, **characterized in that** the image processing routine is based on artificial intelligence, preferably uses a trained neural network, particularly preferably an artificial neural network (ANN) or a convolutional neural network (CNN).

5. System (12) according to any of Claims 1 to 4, **characterized in that** the computing unit (13) is provided and designed to perform segmentation of individual images (16), by means of which the content of a respective image (16) is divided into related segments (18).

6. System (12) according to Claim 5, **characterized in that** the computing unit (13) is provided and designed to semantically segment individual images (16), wherein related segments (18) are assigned to different classes, wherein the different classes are preferably the classes "crop stand", "accompanying vehicle" and "background".

7. System (12) according to any of Claims 1 to 6, **characterized in that** the computing unit (13) is provided and configured to define a polygon (19) for the crop stand (5) along the stand edge (10) and a polygon (20) for the accompanying vehicle (11) along the outermost edge (17) of the accompanying vehicle (11).

8. System (12) according to Claim 7, **characterized in that** the computing unit (13) is provided and configured to define the polygons (19, 20) along segment boundaries (21) between the segments (18) of the classes "crop stand", "accompanying vehicle" and "background".

9. System (12) according to Claim 7 or 8, **characterized in that** the computing unit (13) is provided and configured to determine a reference point (27) of the polygon (19) for the crop stand (5), which reference point, as viewed in an image area of the respective image (16), has a largest or a smallest sum of an x-pixel coordinate and a y-pixel coordinate relative to a defined coordinate cross (23), wherein the coordinate cross (23) defines an x-axis (25) in the horizontal direction and a y-axis (26) in the vertical direction with respect to the respective image (16) starting from a zero point (24).

10. System (12) according to Claim 9, **characterized in that** the computing unit (13) is provided and configured to determine a reference point (28) of the polygon (20) for the accompanying vehicle (11), which reference point, as viewed in an image area of the respective image (16), has a largest or a smallest x-pixel coordinate relative to the defined coordinate cross (23).

11. System (12) according to Claim 9 or 10, **characterized in that** the system (12) comprises an input unit (22), by means of which inputs for further processing by means of the computing unit (13) can be made, wherein the input unit (22) is preferably provided and configured to define the coordinate cross (23) alternately at different points and with different orientations of the x-axis (25) and/or the y-axis (26), wherein the coordinate cross (23) can preferably be defined in a lower left corner of the respective image (16) with the x-axis (25) in the horizontal direction to the right and the y-axis (26) in the vertical direction to the top or in a lower right corner of the respective image (16) with the x-axis (25) in the horizontal direction to left and with the y-axis (26) in the vertical direction to the top.

12. System (12) according to Claims 9 to 11, **characterized in that** the computing unit (13) is provided and configured to define the stand edge (10) at the reference point (27) of the polygon (19) for the crop stand (5), wherein the stand edge (10) extends in the vertical direction starting from the reference point (27), and to define the outermost edge (17) of the accompanying vehicle (11) at the reference point (28) of the polygon (20) for the accompanying vehicle (11), wherein the outermost edge (17) of the accompanying vehicle (11) extends in the vertical direction starting from the reference point (28).

13. System (12) according to any of Claims 1 to 12, **characterized in that** the computing unit (13) is provided and configured to execute a steering algorithm for automatically steering the agricultural harvester (1), wherein the computing unit (13) is preferably further provided and configured to transfer the stand edge (10) to the steering algorithm and to process this steering algorithm or this stand edge by means of the steering algorithm such that the agricultural harvester (1) automatically enters the crop stand (5) and/or automatically keeps to a track when moving in the crop stand (5).

14. Agricultural harvester (1), in particular forage harvester (2), **characterized in that** the agricultural harvester (1) comprises a system (12) for preventing a collision between the agricultural harvester (1) and an accompanying vehicle (11), in particular a tractor with an attached loader wagon, according to any of Claims 1 to 13.

15. Agricultural harvester (1) according to Claim 14, **characterized in that** the at least one camera (14) of the system (12) is arranged on the front side of the agricultural harvester (1), in particular on a cab (9) of the agricultural harvester (1), and/or on an attachment (4) adapted to the agricultural harvester (1).

16. Combination comprising an agricultural harvester (1), in particular a forage harvester (2), and an accompanying vehicle (11), in particular a tractor with an attached loader wagon, **characterized in that** the agricultural harvester (1) is designed according to Claim 14 or 15.

## Revendications

1. Système (12) pour éviter une collision entre une machine de récolte agricole (1), en particulier une récolteuse-hacheuse-chargeuse (2), et un véhicule d'accompagnement (11), en particulier un tracteur auquel est accouplée une remorque, le système (12) comportant une unité de calcul (13) et au moins une caméra (14), la caméra (14) étant prévue et conçue pour recueillir des images (16) d'un environnement frontal (15) de la machine de récolte agricole (1), l'unité de calcul (13) et la caméra (14) étant reliées entre elles de manière à transmettre des données, de telle sorte que les images (16) puissent être transmises à l'unité de calcul (13), **caractérisé en ce que** l'unité de calcul (13) est prévue et conçue pour traiter au moins une des images (16), dans une routine de traitement d'image, de manière à ce que des cultures (5) ainsi qu'un véhicule d'accompagnement (11) dans un champ (3) soient délimités et localisés par rapport à une zone restante du champ (3), l'unité de calcul (13) étant prévue et conçue pour déterminer, sur la base de la localisation effectuée des cultures (5), un bord de culture (10) des cultures (5) et la position de celui-ci, et pour déterminer, sur la base de la localisation effectuée du véhicule d'accompagnement (11), un bord extérieur (17) du véhicule d'accompagnement (11) et la position de celui-ci, l'unité de calcul (13) étant prévue et conçue pour déclencher, en cas de passage sous une distance définie entre la position du bord de culture (10) et la position du bord extérieur (17) du véhicule d'accompagnement (11), un événement visant à éviter une collision imminente entre la machine de récolte agricole (1) et le véhicule d'accompagnement (11).

2. Système (12) selon la revendication 1, **caractérisé en ce que** l'événement est l'émission d'un signal d'avertissement et/ou d'un signal de commande pour l'activation de la machine de récolte agricole (1) et/ou du véhicule d'accompagnement (11), de préférence un signal de commande pour l'activation d'un dispositif de direction et/ou d'un dispositif de freinage de la machine de récolte agricole (1) et/ou du véhicule d'accompagnement (11).

3. Système (12) selon la revendication 2, **caractérisé en ce que** l'unité de calcul (13) est prévue et conçue pour émettre le signal d'avertissement en cas de passage sous une première distance définie, et pour émettre, en cas de passage sous une deuxième distance définie, le signal de commande en vue de la commande de la machine de récolte agricole (1) et/ou du véhicule d'accompagnement (11).

4. Système (12) selon une des revendications 1 à 3, **caractérisé en ce que** la routine de traitement d'image est basée sur l'intelligence artificielle et utilise de préférence un réseau de neurones entraîné, de manière particulièrement avantageuse un Artificial Neural Network (ANN) ou un Convolutional Neural Network (CNN).

5. Système (12) selon une des revendications 1 à 4, **caractérisé en ce que** l'unité de calcul (13) est prévue et conçue pour procéder à une segmentation d'images (16) individuelles, à l'aide de laquelle un contenu d'une image (16) concernée est divisé en segments (18) associés.

6. Système (12) selon la revendication 5, **caractérisé en ce que** l'unité de calcul (13) est prévue et conçue pour segmenter de façon sémantique des images (16) individuelles, des segments (18) associés étant affectés à des catégories différentes, les différentes catégories étant de préférence les catégories « cultures », « véhicule d'accompagnement » et « fond ».

7. Système (12) selon une des revendications 1 à 6, **caractérisé en ce que** l'unité de calcul (13) est prévue et conçue pour définir, le long du bord de culture (10), un polygone (19) pour les cultures (5) et, le long du bord extérieur (17) du véhicule d'accompagnement (11), un polygone (20) pour le véhicule d'accompagnement (11).

8. Système (12) selon la revendication 7, **caractérisé en ce que** l'unité de calcul (13) est prévue et conçue pour définir les polygones (19, 20) le long de limites de segments (21), entre les segments (18) des catégories « cultures », « véhicule d'accompagnement » et « fond ».

9. Système (12) selon la revendication 7 ou 8, **caractérisé en ce que** l'unité de calcul (13) est prévue et conçue pour déterminer un point de référence (27) du polygone (19) pour les cultures (5), qui, vu dans une surface d'image de l'image (16) concernée, présente une somme maximale ou une somme minimale à partir d'une coordonné de pixels x et d'une coordonnée de pixels y par rapport à un système d'axes de coordonnées (23) défini, le système d'axes de coordonnées (23) définissant un axe x (25) dans la direction horizontale et un axe y (26) dans la direction verticale par rapport à l'image (16) concernée, en partant d'un point zéro (24).

10. Système (12) selon la revendication 9, **caractérisé en ce que** l'unité de calcul (13) est prévue et conçue pour déterminer un point de référence (28) du polygone (20) pour le véhicule d'accompagnement (11), qui, vu dans une surface d'image de l'image (16) concernée, présente une coordonné de pixels x maximale ou minimale par rapport au système d'axes de coordonnées (23) défini.

11. Système (12) selon la revendication 9 ou 10, **caractérisé en ce que** le système (12) comprend une unité d'entrée (22) qui permet d'opérer des saisies en vue du traitement ultérieur par l'unité de calcul (13), l'unité d'entrée (22) étant de préférence prévue et conçue pour définir le système d'axes de coordonnées (23) en alternance à différents endroits et avec des orientations différentes de l'axe x (25) et/ou de l'axe y (26), le système de coordonnées (24) pouvant de préférence être défini dans un angle inférieur gauche de l'image concernée (16), avec l'axe x (25) dans la direction horizontale vers la droite, et l'axe y (26) dans la direction verticale vers le haut, ou dans un angle inférieur droit de l'image (16) concernée, avec l'axe x (25) dans la direction horizontale vers la gauche et avec l'axe y (26) dans la direction verticale vers le haut.

12. Système (12) selon les revendications 9 à 11, **caractérisé en ce que** l'unité de calcul (13) est prévue et conçue pour définir le bord de culture (10) au point de référence (27) du polygone (19) pour la culture (5), le bord de culture (10) s'étendant dans la direction verticale en partant du point de référence (27), et pour définir le bord extérieur (17) du véhicule d'accompagnement (11) au point de référence (28) du polygone (20) pour le véhicule d'accompagnement (11), le bord extérieur (17) du véhicule d'accompagnement (11) s'étendant dans la direction verticale en partant du point de référence (28).

13. Système (12) selon une des revendications 1 à 12, **caractérisé en ce que** l'unité de calcul (13) est prévue et conçue pour exécuter un algorithme de direction en vue de la direction automatique de la machine de récolte agricole (1), l'unité de calcul (13) étant de préférence en outre prévue et conçue pour transmettre le bord de culture (10) à l'algorithme de direction et pour traiter le bord ou l'algorithme à l'aide de l'algorithme de direction, de manière à ce que la machine de récolte agricole (1) entre automatiquement dans les cultures (5) et/ou maintienne automatiquement une trajectoire lors de l'entrée dans les cultures (5).

14. Machine de récolte agricole (1), en particulier récolteuse-hacheuse-chargeuse (2), **caractérisée en ce que** la machine de récolte agricole (1) comprend un système (12) pour éviter une collision entre la machine de récolte agricole (1) et un véhicule d'accompagnement (11), en particulier un tracteur auquel est accouplée une remorque, selon une des revendications 1 à 13.

15. Machine de récolte agricole (1) selon la revendication 14, **caractérisée en ce que** la caméra (14), au nombre d'au moins une, du système (12) est disposée à l'avant de la machine de récolte agricole (1), notamment sur une cabine (9) de la machine de récolte agricole (1), et/ou sur un outil frontal (4) adapté sur la machine de récolte agricole (1).

16. Combinaison d'une machine de récolte agricole (1), en particulier d'une récolteuse-hacheuse-chargeuse (2), et d'un véhicule d'accompagnement (11), en particulier d'un tracteur auquel est accouplée une remorque, **caractérisée en ce que** la machine de récolte agricole (1) est réalisée selon la revendication 14 ou 15.
